# EUROPEAN PATENT APPLICATION

(11) **EP 3 783 451 A1**
(43) Date of publication of application: **24.02.2021**
(21) Application number: 19788811.8
(22) Date of filing: 27.03.2019
(51) Int. Cl.: G05B 23/02

(54) **INFORMATION PROCESSING SYSTEM, INFORMATION PROCESSING METHOD, AND INFORMATION PROCESSING PROGRAM**

(30) Priority: 20.04.2018 JP 2018081315
(71) Applicant: Omron Corporation, Kyoto-shi, Kyoto 600-8530 (JP)
(72) Inventor: MUNETA, Yasuo, Kizugawa-shi, Kyoto 619-0283 (JP); OYA, Taku, Kizugawa-shi, Kyoto 619-0283 (JP); SHIMAMURA, Junji, Kizugawa-shi, Kyoto 619-0283 (JP)
(74) Representative: Becker, Eberhard
(86) International application number: PCT/JP2019/013192
(87) International publication number: WO 2019/202934

(57) **Abstract**

An objective of the present invention is to provide an environment in which the behavior of a drive device (55) can be compared with the behavior of a simulator of the drive device (55). Provided is an information processing system comprising: a drive device (55); a controller for controlling the drive device (55) in accordance with a control program (15); an actuator emulator (124) for emulating the behavior of the drive device (55); a controller emulator (120) for controlling the actuator emulator (124) in accordance with the control program (15); a first collection part (60) for collecting first operation data for the drive device (55) during the execution of the control program (15) where a first control parameter group (20A) is input; a second collection part (130) for collecting second operation data for the actuator emulator (124) during the execution of the control program (15) where a second control parameter group (20B) is input; and an output part (133) for outputting the first and second operation data.

## Description

### Technical Field

The present disclosure relates to a technology for collecting operation data of a factory automation (FA) system serving as an actual device and operation data of an FA system on a simulator.

### Related Art

FA systems for automating a production process are widely used in various production sites. An FA system includes, for example, a moving table for moving a workpiece, a conveyor for transporting a workpiece, an arm robot for moving a workpiece to a predetermined target place, and the like. Hereinafter, a moving table, a conveyor, an arm robot, and the like are collectively referred to as "transport devices". These transfer devices are controlled by a controller such as a programmable logic controller (PLC) or a robot controller.

Usually, a designer confirms that a designed control program operates as intended on a simulation and then writes the control program to a controller. Regarding a technology for supporting such a simulation, Japanese Patent Application Laid-Open No. 2016-42378 (Patent Literature 1) discloses a simulation device capable of realizing an integrated simulation including a visual sensor.

### [Citation List]

### [Patent Literature]

Patent Literature 1: Japanese Patent Application Laid-Open No. 2016-42378

### SUMMARY OF INVENTION

### [Technical Problem]

In order to confirm that an FA system serving as an actual device is operating normally, or to confirm that a simulator of the FA system is operating as intended, there is a need for comparison of a behavior of an FA system serving as an actual device with a behavior of a simulator of the FA system. A simulation device disclosed in Patent Literature 1 is not intended to realize such a comparison. Therefore, there is a demand for a technology for providing an environment in which the behavior of an FA system can be compared with the behavior of a simulator of the FA system.

### [Solution to Problem]

In an example of the present disclosure, an information processing system includes a drive device; a controller that executes a control program using a first control parameter group as an input and controls the drive device according to the control program; an actuator emulator that simulates a behavior of the drive device; and a controller emulator that simulates a behavior of the controller. The controller emulator executes the control program using a second control parameter group as an input, and controls the actuator emulator according to the control program. The information processing system includes a first collection part that collects first operation data indicating a behavior of the drive device when the control program is executed using the first control parameter group as an input; a second collection part that collects second operation data indicating a behavior of the actuator emulator when the control program is executed using the second control parameter group as an input; and an output part that outputs a plurality of first operation data collected by the first collection part and a plurality of second operation data collected by the second collection part.

According to this disclosure, the information processing system can provide an environment in which it is possible to compare the operation data acquired for the drive device serving as an actual device with the operation data acquired for the actuator emulator that simulates the behavior of the drive device.

In another example of the present disclosure, the output part displays the plurality of first operation data collected by the first collection part and the plurality of second operation data collected by the second collection part side by side.

According to this disclosure, the designer can easily ascertain a difference between the first operation data and the second operation data.

In still another example of the present disclosure, the output part displays the plurality of first operation data and the plurality of second operation data on the same time axis.

According to this disclosure, the designer can easily ascertain when a difference between the first operation data and the second operation data becomes great.

In still another example of the present disclosure, the output part highlights a combination in which a difference is greater than a predetermined value among combinations of each of the plurality of first operation data and each of the plurality of second operation data, as compared with other combinations.

According to this disclosure, the designer can easily recognize a combination of the first operation data and the second operation data in which a difference is great.

In still another example of the present disclosure, the information processing system further includes a calculation part that calculates a degree of a difference between the plurality of first operation data and the plurality of second operation data; and an adjustment part that repeatedly adjusts at least one of the first control parameter group and the second control parameter group so that a degree of a difference becomes small.

According to this disclosure, the adjustment part can automatically match one of the accuracy of an FA device such as the drive device or the controller and the accuracy of a simulator such as the actuator emulator or the controller emulator with the other.

In still another example of the present disclosure, the adjustment part ends adjusting at least one of the first control parameter group and the second control parameter group based on a fact that the degree of a difference satisfies a predetermined condition.

According to this disclosure, because the adjustment of the first parameter group and the second parameter group is automatically stopped at a point in time when the degree of a difference satisfies the predetermined condition, a time required for an adjustment process is shortened.

In still another example of the present disclosure, the first collection part collects the first operation data in each communication period of the drive device and the controller, and the second collection part collects the second operation data in a predetermined period according to the communication period.

According to this disclosure, a designer can more easily compare the first operation data with the second operation data by the first operation data and the second operation data being collected in a corresponding period.

In still another example of the present disclosure, an information processing method includes: causing a controller to execute a control program using a first control parameter group as an input and controlling a drive device according to the control program; controlling an actuator emulator that simulates a behavior of the drive device; and controlling a controller emulator that simulates a behavior of the controller. The controlling of the controller emulator includes executing the control program using a second control parameter group as an input and controlling the actuator emulator according to the control program. The information processing method includes collecting first operation data indicating a behavior of the drive device when the control program is executed using the first control parameter group as an input; collecting second operation data indicating a behavior of the actuator emulator when the control program is executed using the second control parameter group as an input; and outputting a plurality of collected first operation data and a plurality of collected second operation data.

According to this disclosure, the designer can compare the operation data acquired for the drive device serving as an actual device with the operation data acquired for the actuator emulator that simulates the behavior of the drive device.

In still another example of the present disclosure, an information processing program causes a computer to execute: causing a controller to execute a control program using a first control parameter group as an input and controlling a drive device according to the control program; controlling an actuator emulator that simulates a behavior of the drive device; and controlling a controller emulator that simulates a behavior of the controller. The controlling of the controller emulator includes executing the control program using a second control parameter group as an input and controlling the actuator emulator according to the control program. The information processing program causes the computer to further execute collecting first operation data indicating a behavior of the drive device when the control program is executed using the first control parameter group as an input; collecting second operation data indicating a behavior of the actuator emulator when the control program is executed using the second control parameter group as an input; and outputting a plurality of collected first operation data and a plurality of collected second operation data.

According to this disclosure, the designer can compare the operation data acquired for the drive device serving as an actual device with the operation data acquired for the actuator emulator that simulates the behavior of the drive device.

### [Advantageous Effects of Invention]

In a certain aspect, it is possible to compare the behavior of the FA system and the behavior of the simulator of the FA system.

### BRIEF DESCRIPTION OF DRAWINGS

Fig. 1 is a diagram illustrating an information processing system according to an embodiment.
Fig. 2 is a diagram illustrating an example of a display mode of operation data.
Fig. 3 is a diagram illustrating an example of a functional configuration of the information processing system according to an embodiment.
Fig. 4 is a diagram illustrating a device configuration of an FA system according to the embodiment.
Fig. 5 is a diagram illustrating an example of a functional configuration of a servo driver.
Fig. 6 is a diagram illustrating an example of a configuration of a simulator.
Fig. 7 is a diagram illustrating an example of a generated trajectory.
Fig. 8 is a diagram illustrating an example of an edit screen for a PLC program and a robot program.
Fig. 9 is a diagram illustrating an example of an edit screen for a PLC program and a robot program.
Fig. 10 is a diagram illustrating a process of synchronizing timings at which a command value is output to actuator emulators.
Fig. 11 is a diagram illustrating an example of a simulation screen in an information processing device according to the embodiment.
Fig. 12 is a schematic diagram illustrating a hardware configuration of the information processing device according to the embodiment.
Fig. 13 is a flowchart illustrating a control parameter group adjustment process.

### DESCRIPTION OF EMBODIMENTS

Hereinafter, each embodiment according to the present invention will be described with reference to the drawings. In the following description, the same parts and components are designated by the same reference signs. Their names and functions are also the same. Therefore, detailed description thereof will not be repeated.

### <A. Application example>

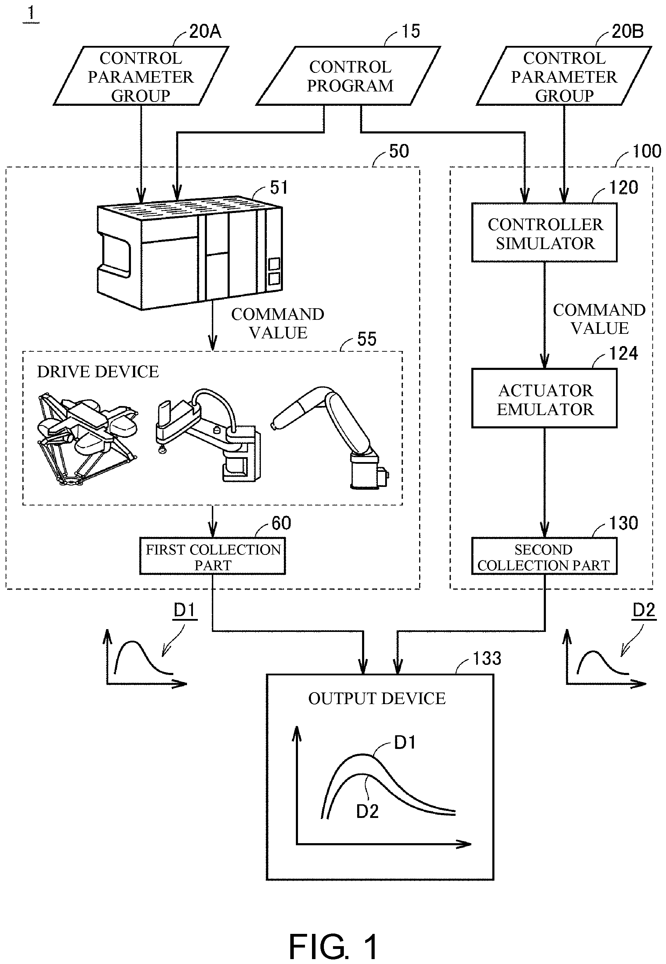

First, an application example of the present invention will be described with reference to Fig. 1. Fig. 1 is a diagram illustrating an information processing system 1 according to an embodiment.

The information processing system 1 includes an FA system 50, an information processing device 100 that provides a simulation environment for the FA system 50, and an output device 133. The FA system 50 includes, for example, a controller 51, a drive device 55, and a first collection part 60. The information processing device 100 includes a controller emulator 120, an actuator emulator 124, and a second collection part 130.

The controller 51 is, for example, a PLC or a robot controller. The controller 51 is network-connected to the drive device 55 via an industrial field network and controls various types of drive device 55.

The controller 51 receives the control parameter group 20A (first control parameter group) as an input, executes a control program 15, and controls the drive device 55 according to the control program 15. The control parameter group 20A is a parameter group that affects a processing result of the control program 15. The control program 15 may be described in a cyclic execution type programming language (for example, a ladder language or a structured text (ST) language), or may be in a sequential execution type language.

The drive device 55 is a workpiece transfer device that directly or indirectly acts on the workpiece in a production process. The drive device 55 is driven according to a control command received from the controller 51. The drive device 55 is, for example, a robot mechanism such as a parallel robot, a SCARA robot, or an articulated robot. Alternatively, the drive device 55 may be a moving table for moving the work, a conveyor for conveying the work, or the like.

The first collection part 60 collects a plurality of operation data D1 (first operation data) indicating a behavior of the drive device 55 when the control program 15 is executed using the control parameter group 20A as an input. The first collection part 60 may be various sensors for detecting the operation data D1 of the drive device 55, or may be a collection program for data collection. The operation data D1 is, for example, a position, velocity, acceleration, angular velocity, or angular acceleration of each part of the drive device 55.

The controller emulator 120 is a program for simulating a behavior of the controller 51. The controller emulator 120 receives the control parameter group 20B (second control parameter group) as an input, executes the control program 15, and controls the controller emulator 120 according to the control program 15. The control parameter group 20B is a parameter group that affects the processing result of the control program 15. Typically, a type of the control parameter group 20B is the same as a type of the control parameter group 20A.

The actuator emulator 124 is a program for simulating the behavior of the drive device 55. The actuator emulator 124 simulates an operation of the drive device 55 on a computer according to the control command received from the controller emulator 120.

The second collection part 130 is a collection program for collecting data. The second collection part 130 collects a plurality of operation data D2 (second operation data) indicating a behavior of the actuator emulator 124 when the control program 15 is executed using the control parameter group 20B as an input. The operation data D2 is, for example, a position, velocity, acceleration, angular velocity, and angular acceleration of each part of the drive device 55 on the simulation.

The output device 133 is device for presenting various types of information to the designer. The output device 133 is, for example, a display or an indicator. The output device 133 outputs the plurality of operation data D1 collected from the FA system 50 that is an actual device and the plurality of operation data D2 collected from the simulator. This allows the designer to compare the behavior of the FA system 50 with the behavior of the simulator.

The designer can adjust the control parameter group 20B to bring the operation data D2 closer to the operation data D1, thereby designing a simulator that can more accurately simulate the behavior of the FA system 50. As a result, the accuracy of various emulators such as the controller emulator 120 and the actuator emulator 124 is improved. The designer can construct a new simulator using such various emulators, thereby better designing simulators of various FA systems.

Further, the designer can adjust the control parameter group 20A to bring the operation data D1 closer to the operation data D2, thereby operating the FA system 50 as a simulator. Such adjustment is effective, for example, with respect to deterioration over time or environmental change of the FA system 50. Although the accuracy of the FA system 50 may decrease due to deterioration over time, environmental changes, or the like, the designer can confirm that the operation data D1 deviates from the operation data D2, thereby ascertaining that the accuracy has decreased for some causes. Thereafter, the designer can adjust the control parameter group 20A to bring the operation data D1 closer to the operation data D2, thereby bringing the accuracy of the FA system 50 close to an original accuracy.

### <B. Operation data display mode>

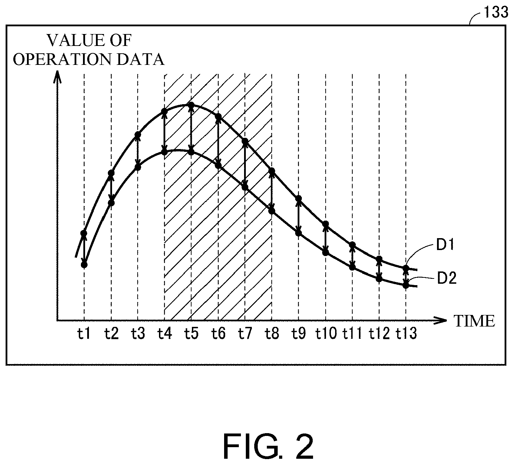

A display mode of the operation data D1 (see Fig. 1) collected from the FA system 50 and the operation data D2 (see Fig. 1) collected from the information processing device 100 that has executed the simulation will be described with reference to Fig. 2. Fig. 2 is a diagram illustrating an example of a display mode of the operation data D1 and D2.

The first collection part 60 collects the operation data D1 at each of communication periods of the controller 51 and the drive device 55, and stores the operation data D1 in association with each of times. The time referred to here is a relative time after the execution of the control program 15 is started. On the other hand, the second collection part 130 collects the operation data D2 in a predetermined period according to the communication period, and stores the operation data D2 in association with each of times. The time referred to here is a relative time after the execution of the control program 15 is started.

The output device 133 displays the plurality of operation data D1 collected by the first collection part 60 and the plurality of operation data D2 collected by the second collection part 130 side by side. Thereby, the designer can easily ascertain a difference between the operation data D1 and the operation data D2.

Preferably, the output device 133 displays the plurality of operation data D1 and the plurality of operation data D2 on the same time axis. The same time axis may be one time axis common to the operation data D1 and D2, or may be two identical time axes displayed for each of the operation data D1 and D2. That is, the operation data D1 and D2 may be displayed on one time axis, or the operation data D1 may be displayed on a first time axis and the operation data D2 may be displayed on a second time axis which is the same as the first time axis. By the operation data D1 and D2 being displayed on the same time axis, the designer can easily ascertain when a difference between the operation data D1 and D2 becomes great.

Preferably, the output device 133 highlights a portion in which the difference is greater than a predetermined value in each combination of each of the plurality of operation data D1 and each of the plurality of operation data D2, as compared with other portions. Thereby, the designer can easily recognize a combination of the operation data D1 and D2 having a great difference.

More specifically, the information processing device 100 specifies the corresponding operation data D2 for each of the plurality of operation data D1 using the time as a key, and calculates the difference for each combination of the specified operation data D1 and D2. The information processing device 100 specifies a combination of the operation data D1 and D2 of which a difference value exceeds the predetermined value as a highlighted portion. As an example, it may be assumed that the combination of the operation data D1 and D2 in times t4 to t8 is specified as the highlighted portion. In this case, the output device 133 highlights the combination of the operation data D1 and D2 in times t4 to t8 among the combinations of the operation data D1 and D2 in times t1 to t13 as compared with the other combinations.

Any highlighting method is used. For example, the highlighted portion may be displayed in a color different from those of the other portions or may be displayed in a font different from those of the other portions. The highlighted portion may be displayed in a display mode (for example, blinking) different from those of the other portions.

Preferably, the output device 133 increases a degree of highlighting as the difference value between the operation data D1 and D2 becomes greater. This allows the designer to visually ascertain a magnitude of the difference value between the operation data D1 and D2.

### <C. Functional configuration of information processing system 1>

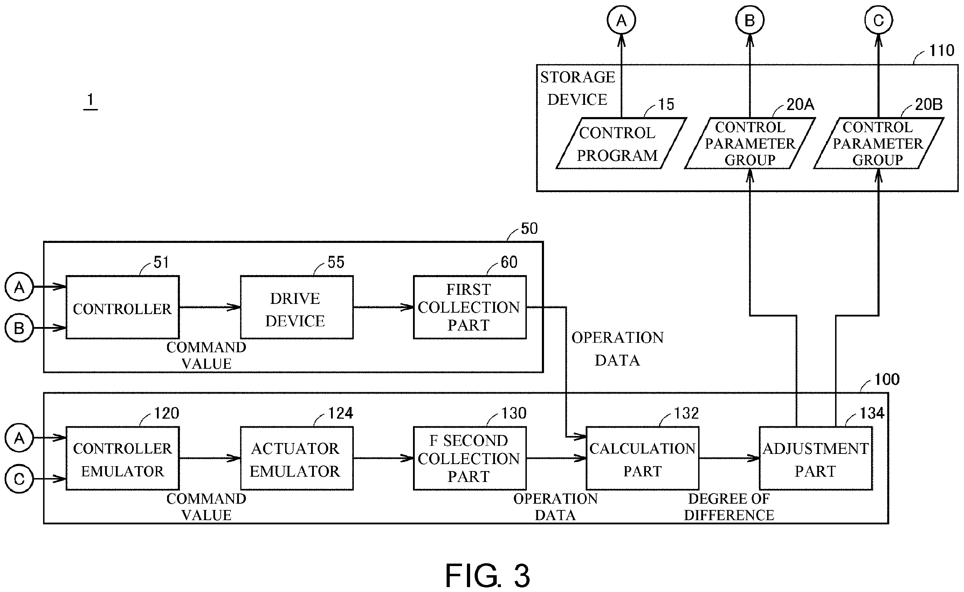

A functional configuration of the information processing system 1 will be described with reference to Fig. 3. Fig. 3 is a diagram illustrating an example of the functional configuration of the information processing system 1.

The information processing system 1 includes an FA system 50, an information processing device 100, and a storage device 110 as main components, as illustrated in Fig. 3. The FA system 50 includes a controller 51, a drive device 55, and a first collection part 60. The information processing device 100 includes a controller emulator 120, an actuator emulator 124, a second collection part 130, a calculation part 132, and an adjustment part 134.

Because a configuration other than calculation part 132 and the adjustment part 134 is as described in Fig. 1, description thereof will not be repeated.

The calculation part 132 compares the plurality of operation data D1 collected by the first collection part 60 and the plurality of operation data D2 collected by the second collection part 130 to calculate a degree of the difference between the operation data D1 and D2. More specifically, the calculation part 132 specifies the corresponding operation data D2 for each of the plurality of operation data D1 using the time as a key, and calculates the difference for each combination of the specified operation data D1 and D2. The calculation part 132 averages absolute values of the calculated difference values and calculates an average value as the degree of difference. Alternatively, the calculation part 132 calculates a maximum value among the absolute values of the calculated difference values as the degree of difference. The degree of difference is output to the adjustment part 134 each time the degree of difference is calculated.

The adjustment part 134 repeatedly adjusts at least one of the control parameter group 20A and the control parameter group 20B so that the degree of difference calculated by the calculation part 132 becomes small. More specifically, the adjustment part 134 stores the degree of the difference between the operation data D1 and D2 for each control parameter group, and adopts the control parameter group in which the degree of difference is minimized, as a final set value. This allows the adjustment part 134 to automatically match the accuracy of one of the FA system 50 and the simulator with the accuracy of the other.

Typically, the adjustment part 134 ends the adjustment process of the control parameter groups 20A and 20B based on the fact that the degree of the difference between the operation data D1 and D2 satisfies a predetermined convergence condition. The convergence condition is satisfied, for example, when the degree of the difference between the operation data D1 and D2 becomes smaller than a predetermined threshold value. Alternatively, the convergence condition may be satisfied when the number of adjustments of the control parameter groups 20A and 20B exceeds a predetermined number.

Preferably, the information processing device 100 is configured to be able to select which of the control parameter groups 20A and 20B will be an adjustment target. The adjustment part 134 repeatedly adjusts the control parameter group selected as an adjustment target according to the other control parameter group.

Any method of adjusting the control parameter groups 20A and 20B using the adjustment part 134 is used. In a certain aspect, when the adjustment part 134 adjusts the control parameter group 20A, the adjustment part 134 adjusts each control parameter of the control parameter group 20A by a predetermined value and adopts a control parameter group in which a degree of the difference between the operation data D1 and D2 is minimized as a final set point. Similarly, when the adjustment part 134 adjusts the control parameter group 20B, the adjustment part 134 adjusts each control parameter of the control parameter group 20B by a predetermined value and adopts a control parameter group in which the degree of the difference between the operation data D1 and D2 is minimized as a final set point.

In another aspect, the information processing device 100 may be configured to be able to select a control parameter of the adjustment target from among the control parameters of the control parameter group 20A or the control parameters of the control parameter group 20B. The adjustment part 134 adjusts the selected control parameter by a predetermined value and adopts a control parameter group in which the degree of the difference between the operation data D1 and D2 is minimized as a final set point.

### <D. Device configuration of the FA system 50>

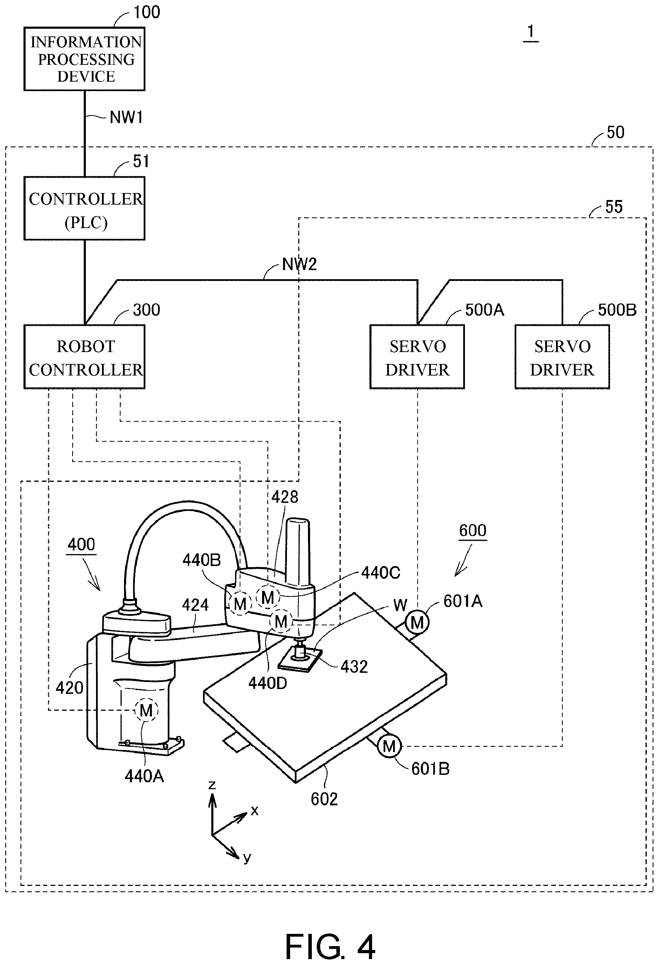

A device configuration of the FA system 50 will be described with reference to Fig. 4. Fig. 4 is a diagram illustrating the device configuration of the FA system 50.

As illustrated in Fig. 4, the information processing system 1 includes an FA system 50 and an information processing device 100 that provides a simulation environment for the FA system 50. The FA system 50 includes a controller 51 as a PLC, a drive device 55, and a robot controller 300. The drive device 55 includes an arm robot 400, servo drivers 500A and 500B, and a moving table 600.

The information processing device 100 provides a designer with a development environment for designing the controller 51 as a PLC or the control program 15 of the robot controller 300. The information processing device 100 is a support device such as a personal computer (PC), a tablet terminal, or a smartphone, for example. The controller 51 and the information processing device 100 are connected to the field network NW1. For example, EtherNET (registered trademark) is adopted for the field network NW1. However, the field network NW1 is not limited to EtherNET, and any communication means can be adopted. For example, the controller 51 and the information processing device 100 may be directly connected by a signal line.

The controller 51, the robot controller 300, and the servo drivers 500A and 500B are connected to a field network NW2 in a daisy chain. For the field network NW2, it is preferable to adopt a network that performs fixed period communication, in which arrival time of data is guaranteed. EtherCAT (registered trademark), DeviceNet (registered trademark), CompoNet (registered trademark), and the like are known as networks that perform such fix period communication.

The arm robot 400 is, for example, a SCARA robot. The arm robot 400 includes a base 420, a first arm 424, a second arm 428, and an end effector 432. The first arm 424 is connected to the base 420, and is configured to be rotatable by a servo motor 440A on an xy plane with a connection point as a rotation shaft. The second arm 428 is connected to the first arm 424, and is rotationally driven by a servo motor 440B on the xy plane with a connection point as a rotation shaft. The end effector 432 is connected to the second arm 428, and is configured to be drivable by the servo motor 440C along the z direction, and is configured to be rotatable by the servo motor 440D.

Hereinafter, the servo motors 440A to 440D are also collectively referred to as a servo motor 440. A plurality of servo drivers (not illustrated) are embedded in the robot controller 300, and each servo driver controls the corresponding servo motor 440. An encoder (not illustrated) is provided on a rotation shaft of the servo motor 440. The encoder feeds back a position (the rotation angle) of the servo motor 440, a rotation speed of the servo motor 440, a cumulative number of rotations of the servo motor 440, or the like to the corresponding servo driver. The servo driver does not necessarily have to be built into the robot controller 300 and may be provided separately from the robot controller 300.

The end effector 432 is, for example, a pick-up tool for a workpiece W. The workpiece W is a product or a semi-finished product. As an example, the end effector 432 picks up the workpiece W by adsorbing the workpiece W using a suction force. The arm robot 400 may be configured to pick up the workpiece W by gripping the workpiece W.

The moving table 600 includes the servo motors 601A and 601B and an installation table 602 for the workpiece W. The servo motor 601A is controlled by the servo driver 500A and drives the installation table 602 in an x-axis direction. The servo motor 601B is controlled by the servo driver 500B and drives the installation table 602 in a y-axis direction. The installation table 602 is driven to any position on the xy plane by the servo motors 601A and 601B being driven in cooperation.

Hereinafter, the servo drivers 500A and 500B are collectively referred to as a servo driver 500, and the servo motors 601A and 601B are also collectively referred to as a servo motor 601. The servo driver 500 controls the corresponding servo motor 601. An encoder 605 to be described below is provided on a rotation shaft of the servo motor 601. The encoder 605 feeds back a position (a rotation angle), a rotation speed, a cumulative number of rotations, or the like of the servo motor 601 to the servo driver 500.

The arm robot 400 and the moving table 600 are synchronously driven by the controller 51 and the robot controller 300 operating in cooperation. As a result, for example, the arm robot 400 can pick up the workpiece W on the installation table 602 while the moving table 600 is moving.

### <E. Configuration of servo driver 500>

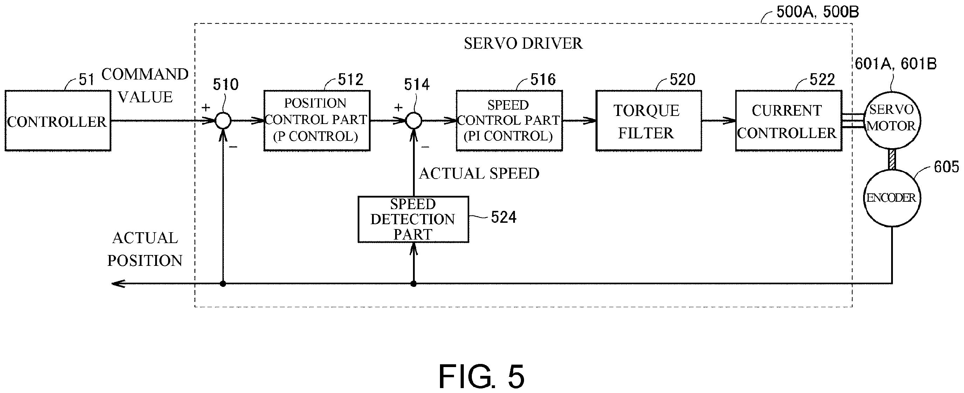

A functional configuration of the servo drivers 500A and 500B illustrated in Fig. 4 (hereinafter also referred to as a "servo driver 500") will be described with reference to Fig. 5. Fig. 5 is a diagram illustrating an example of the functional configuration of the servo driver 500.

The servo driver 500 outputs a control signal (an electrical signal) to the servo motors 601A and 601B (hereinafter also referred to as a "servo motor 601") according to the command value output from the controller 51. As an example, the target position is given from the controller 51 to the servo driver 500. The servo driver 500 controls a drive current to be supplied to the servo motor 601 so that an actual position of the moving table 600 that is a driving target matches the target position from the controller 51.

Typically, in the servo driver 500, a control loop including a minor loop for a speed in addition to a main loop for a position is implemented. More specifically, the servo driver 500 includes, as functional configurations, difference computation parts 510 and 514, a position control part 512, a speed control part 516, an addition part 518, a torque filter 520, a current control part 522, and a speed detection part 524.

The position control part 512 is a control computation part constituting the control loop for a position, and outputs a control amount according to a deviation between the target position and the actual position (a feedback value), which is calculated by the difference computation part 510. As the position control part 512, typically, P (proportional) control may be used. That is, the position control part 512 outputs a value obtained by multiplying the deviation between the target position and the actual position by a predetermined proportional coefficient as the control amount.

The speed control part 516 is a control computation part constituting the control loop for a speed, and outputs a control amount according to a deviation between the control amount from the position control part 512 and the actual speed from the speed detection part 524, which is calculated by the difference computation part 514. As the speed control part 516, typically, PI (proportional integration) control may be used. That is, the position control part 512 outputs, as the control amount, a sum of a value obtained by multiplying a deviation between a command speed from the position control part 512 and the actual speed by the proportional coefficient and a value obtained by integrating with the integration element.

The torque filter 520 mitigates a degree of change over time so that a degree of change per unit time of the control amount output from the speed control part 516 (a command value of the torque to be generated by the servo motor 601) does not become too high. That is, the torque filter 520 blunts the control amount output from the speed control part 516. The control amount from the torque filter 520 is output to the current control part 522.

The current control part 522 determines a switching timing of the servo motor 601 of the moving table 600 according to the control amount from the torque filter 520. That is, the current control part 522 determines a magnitude, timing, waveform, or the like of the current to be supplied to the servo motor 601 so that a command torque determined by the torque filter 520 can be realized. The servo motor 601 is driven according to the control amount determined by the current control part 522. The servo motor 601 is rotationally driven by the current supplied from the servo motor 601.

The actual position is output from the encoder 605 as a feedback value indicating a displacement of the moving table 600, and the speed detection part 524 differentiates the actual position from the encoder 605 to calculate the actual speed.

Although the functional configuration of the servo driver 500 for driving the moving table 600 has been described with reference to Fig. 5, the servo driver for driving the arm robot 400 described above has the same functional configuration as that of the servo driver 500 illustrated in Fig. 5.

### <F. Data that is collection target>

The operation data D1 (see Fig. 1) collected by the first collection part 60 and the operation data D2 (see Fig. 1) collected by the second collection part 130 will be described with continuous reference to Fig. 5.

The operation data D1 is, for example, a position, velocity, acceleration, angular velocity, or angular acceleration of each part of the drive device 55. The operation data D1 is acquired from, for example, the servo driver 500 or the encoder 605 illustrated in Fig. 5.

More specifically, the first collection part 60 collects an actual position of the drive device 55 detected by the encoder 605 as the operation data D1. Further, the first collection part 60 may collect an actual speed of the drive device 55 detected by the speed detection part 524 of the servo driver 500 as the operation data D1. Further, the first collection part 60 may collect an actual speed of the drive device 55 detected by the speed detection part 524 of the servo driver 500 as the operation data D1. Further, the first collection part 60 may collect the command value output from the controller 51 as the operation data D1.

Further, the first collection part 60 may collect, as the operation data D1, a time during which the arm robot 400 adsorbs the workpiece using air pressure. Further, the first collection part 60 may collect a vibration frequency in an arm portion of the arm robot 400 as the operation data D1.

The second collection part 130 collects the same type of data as the operation data D1 as the operation data D2 on the simulation.

### <G. Simulator>

The information processing device 100 uses an emulator group that simulates a behavior of each device in the FA system 50 in order to simulate an operation of the FA system 50 serving as the actual device illustrated in Fig. 4. The emulator referred to here means a program capable of reproducing the behavior of each device in the FA system 50. Because each emulator accurately simulates the behavior of each device in the FA system 50, the information processing device 100 can accurately simulate the operation of the FA system 50 serving as an actual device.

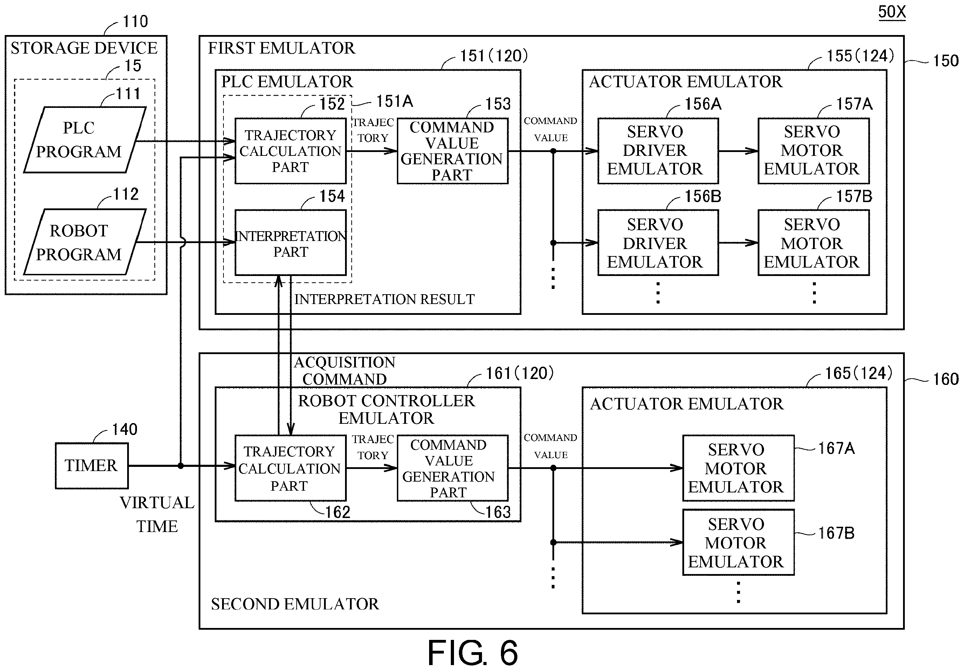

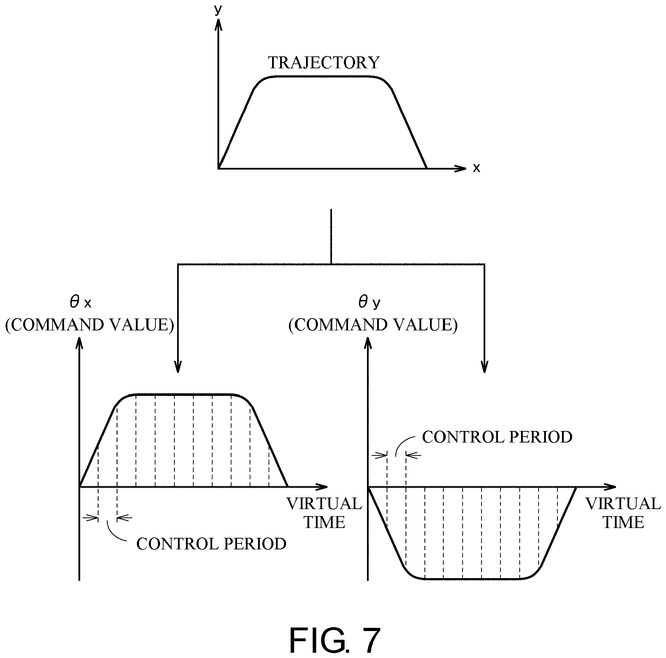

Hereinafter, a simulator 50X configured of an emulator will be described with reference to Figs. 6 and 7. Fig. 6 is a diagram illustrating an example of a configuration of the simulator 50X.

The simulator 50X includes a storage device 110, a timer 140 for generating a virtual time, a first emulator 150, and a second emulator 160, as illustrated in Fig. 6.

The storage device 110 stores a control program 15 for controlling the simulator 50X. In the example of Fig. 6, the control program 15 includes a PLC program 111 for controlling the first emulator 150 and a robot program 112 for controlling the second emulator 160.

The first emulator 150 includes a PLC emulator 151 that simulates the behavior of the controller 51, and an actuator emulator 155 that simulates a behavior of a drive device such as the moving table 600. The PLC emulator 151 includes an execution part 151A and a command value generation part 153. The actuator emulator 155 includes servo driver emulators 156A and 156B for simulating a behavior of the servo drivers 500A and 500B (see Fig. 4), and servo motor emulators 157A and 157B for simulating a behavior of the servo motors 601A and 601B (see Fig. 4).

The execution part 151A executes a PLC program for controlling the actuator emulator 155 and a robot program 112 for controlling the actuator emulator 165.

The execution part 151A includes a trajectory computation part 152 and an interpretation part 154. The trajectory computation part 152 reads the PLC program 111 for driving the actuator emulator 155 on the simulation and generates a trajectory for driving the actuator emulator 155. The PLC program 111 is described in a cyclic execution type programming language and is described in, for example, a ladder language or a structured text (ST) language. The cyclic execution type refers to an execution form in which a command group included in a program is repeatedly executed in a predetermined control period. That is, the trajectory computation part 152 repeatedly executes a command group included in the PLC program 111 in a predetermined control period. The control period is based on the virtual time generated by the timer 140.

A movement command for moving the moving table 600 to the target position is included in the PLC program 111. When the movement command included in the PLC program 111 is executed, the trajectory computation part 152 generates a trajectory for moving the control target on the simulation using the actuator emulator 155. The trajectory is generated, for example, based on a current position of the driving target and the target position included in the movement command. Fig. 7 is a diagram illustrating an example of the generated trajectory. Although the trajectory on the xy plane is shown in the example of Fig. 7, the trajectory to be generated may be one-dimensional or may be three-dimensional. The generated trajectory is output to the command value generation part 153. The trajectory computation part 152 sends an interpretation command for the next command to the interpretation part 154 based on the fact that the position of the arm robot 400 driven by the actuator emulator 165 reaches the target position.

The command value generation part 153 generates a command value to be output to the actuator emulator 155 according to the generated trajectory. The command value is a control value for driving the servo motor emulators 157A and 157B on the simulation, and is indicated as, for example, a rotation angle, a rotation speed, or a position. In the example of Fig. 7, the command value generation part 153 generates a rotation angle θx for the servo motor emulator 157A and a rotation angle θy for the servo motor emulator 157B as the command value in a control period. The corresponding rotation angles θx and θy are sequentially output to the servo motor emulators 157A and 157B according to a current virtual time.

The servo driver emulators 156A and 156B drive the servo motor emulators 157A and 157B on the simulation according to the command value output from the command value generation part 153.

The second emulator 160 includes a robot controller emulator 161 that simulates a behavior of the robot controller 300, and an actuator emulator 165 that simulates a behavior of the drive device of the arm robot 400. The robot controller emulator 161 includes a trajectory computation part 162 and a command value generation part 163. The actuator emulator 165 includes the servo motor emulators 167A and 167B that simulate behaviors of the servo motors 440A and 440B illustrated in Fig. 4.

The interpretation part 154 executes the robot program 112. The robot program 112 includes a command group for driving the actuator emulator 165 on a simulation. The robot program 112 is described in a sequential execution type robot language. The sequential execution type refers to an execution mode in which a command group included in a program is sequentially executed in a predetermined execution order. That is, the interpretation part 154 sequentially executes the command group included in the robot program 112 in a predetermined execution order. The execution of the command group is executed according to the virtual time generated by the timer 140. In the example of Fig. 6, the interpretation part 154 interprets the command group included in the robot program 112 in a predetermined execution order, and sequentially outputs an interpretation result to the robot controller emulator 161.

When the interpretation result output from the interpretation part 154 indicates the movement command, the trajectory computation part 162 generates a trajectory for moving the control target on the simulation using the actuator emulator 165. The trajectory is generated based on the current position of the drive target and the target position included in the movement command. The generated trajectory is output to the command value generation part 163.

The command value generation part 163 generates a command value to be output to the actuator emulator 165 according to the trajectory output from the trajectory computation part 162. The command value is a control value for driving the servo motor emulators 167A and 167B on the simulation, and is indicated as, for example, a virtual rotation angle, rotation speed, or position of the servo motor emulators 167A and 167B. Because a method for generating the command value for the actuator emulator 165 is the same as the method for generating the command value for the actuator emulator 155, description thereof will not be repeated.

The servo motor emulators 167A and 167B are driven on the simulation according to the command value output from the command value generation part 163. The actuator emulator 165 may include a servo driver emulator, like the actuator emulator 155.

The above description has been given using examples of the PLC program 111 and the robot program 112, but the control program that is an execution target of the information processing device 100 is not limited to the PLC program 111 and the robot program 112. As the control program, any control program can be adopted as long as the control program is a control program described in a different type of a programming language.

### <H. Synchronous execution process of control program>

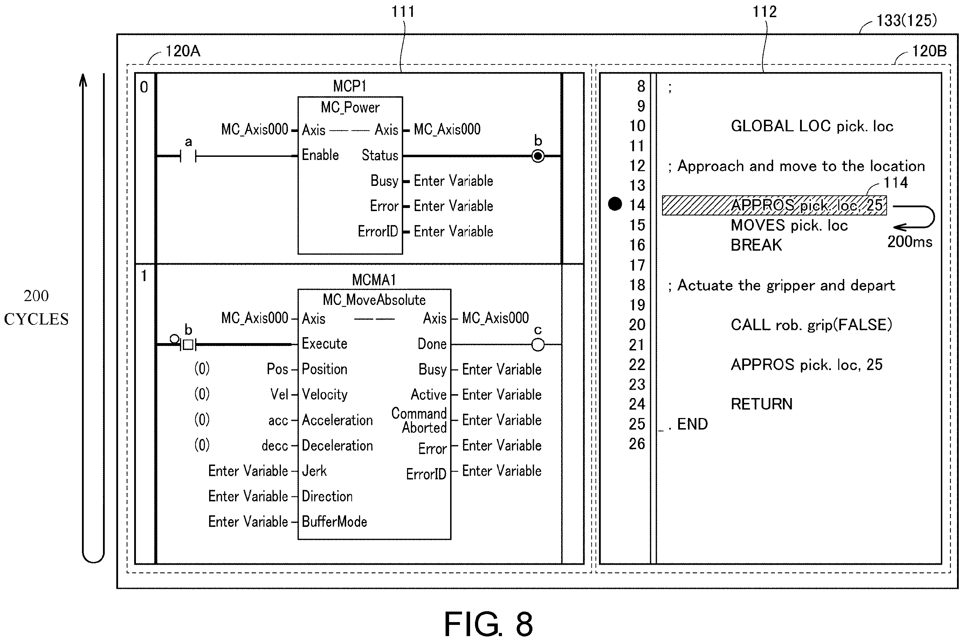

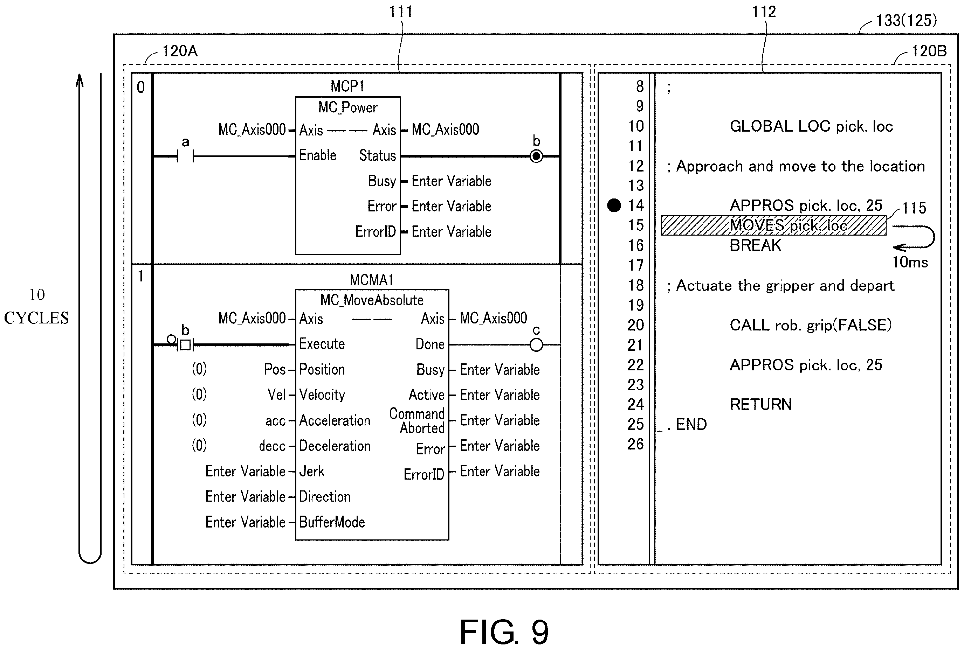

The PLC program 111 and the robot program 112 described above are executed in synchronization. This allows the information processing device 100 to cause the table driven according to the PLC program 111 and the robot driven according to the robot program 112 to cooperate on the simulation. Hereinafter, a process of synchronizing the PLC program 111 and the robot program 112 will be described with reference to Figs. 8 and 9.

Figs. 8 and 9 are diagrams illustrating examples of edit screens of the PLC program 111 and the robot program 112. An edit screen 125 of the PLC program 111 and the robot program 112 is displayed on the output device 133 of the information processing device 100. The edit screen 125 includes an editing area 120A of the PLC program 111 and an editing area 120B of the robot program 112. The editing areas 120A and 120B are displayed side by side on one screen. This allows the designer to design the PLC program 111 and the robot program 112 in parallel.

As described above, the PLC program 111 is a cyclic execution type program. Therefore, the PLC emulator 151 (see Fig. 6) repeatedly executes the command group included in the PLC program 111 in a predetermined control period. More specifically, the PLC emulator 151 executes the PLC program 111 from the beginning to the end in one control period. In the next control period, the PLC emulator 151 executes the PLC program 111 from the beginning to the end again.

Meanwhile, the robot program 112 is a sequential execution type program. Therefore, the interpretation part 154 (see Fig. 6) sequentially interprets the command group included in the robot program 112 in a predetermined execution order. As a result, the robot controller emulator 161 executes the robot program 112 line by line from the top. In this case, the interpretation part 154 does not interpret the command on the next line until the execution of the command on each line is completed. More specifically, based on the fact that the execution of the current command is completed, the robot controller emulator 161 feeds back the fact to the interpretation part 154. The interpretation part 154 receives this feedback and interprets the command of the next line.

Because of such a difference in execution mode, it is necessary for the command group in the PLC program 111 and the command group included in the robot program 112 to be executed in synchronized control periods in order to execute the PLC program 111 and the robot program 112 in synchronization.

In order to realize the synchronous execution, the interpretation part 154 calculates, for each command included in the robot program 112 (second control program), an execution time required for executing the command. The execution time referred to here may be represented by an index that is correlated with a time required for execution of the commands included in the robot program 112 and, for example, may be represented by the number of cycles of the control period required for execution of each command included in the robot program 112. The number of cycles is based on the virtual time of the timer 140. The virtual time is represented by a unit "ms", for example. In the example of Fig. 8, the number of cycles of "200 ms" is specified for the robot command 114 shown in the 14th line of the robot program 112. "APPROSpickloc,25" shown in the robot command 114 is a movement command to move the arm robot 400 to the target position "25". By the interpretation part 154 interpreting the movement command, "200 ms" is specified as the number of cycles of the control period required to move the arm robot 400 to the target position.

While the robot controller emulator 161 is executing the robot command 114, the PLC emulator 151 repeatedly executes the command group included in the PLC program 111 for a time "200 ms" required for execution of the robot command 114. As an example, when the control period of the PLC program 111 is "1 ms", the PLC emulator 151 repeatedly executes the PLC program 111 for 200 cycles (=200 ms/1 ms) while the robot command 114 is being executed.

After the PLC emulator 151 repeats the command group included in the PLC program 111 for the execution time required for execution of the robot command 114, the robot controller emulator 161 starts execution of the next command of the robot command 114. An example thereof is illustrated in Fig. 9. In the example of Fig. 9, the interpretation part 154 switches control from the robot command 114 to the robot command 115. "MOVESpick.loc" shown in the robot command 115 is a movement command to move the arm robot 400 to the target position "pick.loc". By the interpretation part 154 interpreting the robot command 115, an execution time "10 ms" required to move the arm robot 400 to the target position is specified. The execution time is specified before or when the execution of the robot command 115 starts.

Thereafter, the PLC emulator 151 repeatedly executes the command group included in the PLC program 111 for the time "10 ms" required for execution of the robot command 115 while the interpretation part 154 is executing the robot command 115. As an example, when the control period of the PLC program 111 is "1 ms", the PLC emulator 151 repeatedly executes the PLC program 111 for 10 cycles (=10 ms/1 ms) while the robot command 115 is being executed.

### <I. Synchronous command value output process>

In order to simulate a communication mode in EtherCAT, the PLC emulator 151 (see Fig. 6) outputs a command value to the actuator emulator 155 in a predetermined control period according to a communication period of EtherCAT. Similarly, the robot controller emulator 161 (see Fig. 6) outputs a command value to the actuator emulator 165 in a predetermined control period according to the communication period of EtherCAT. This allows the operation of the FA system 50 to be simulated in the same communication mode as that of an actual system.

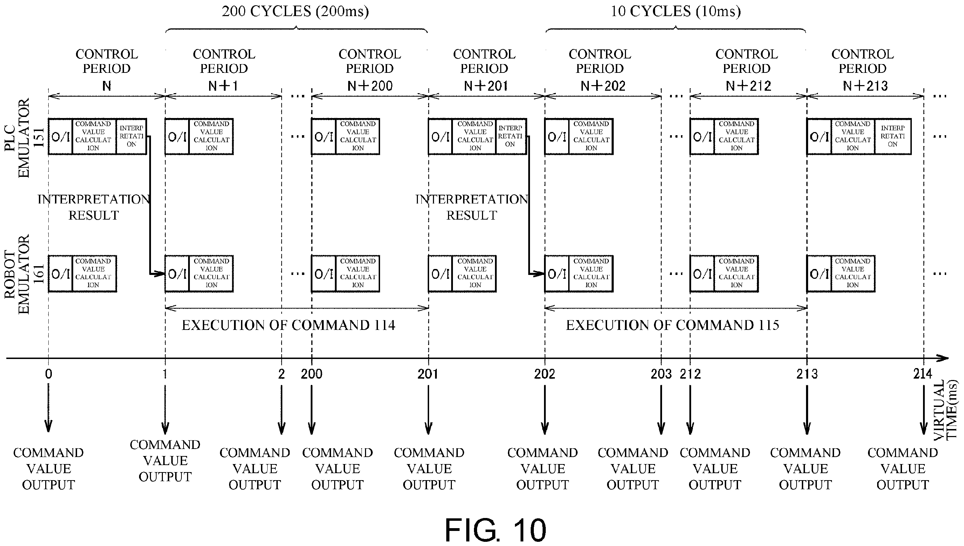

Fig. 10 is a diagram illustrating a process of synchronizing timings at which a command value is output to the actuator emulators 155 and 165 (see Fig. 6). Hereinafter, the process of synchronizing timings at which the command value is output e will be described by taking the process of executing the robot commands 114 and 115 (see Figs. 8 and 9) included in the robot program 112 as an example.

In a control period "N", the PLC emulator 151 sequentially executes an O/I (Output/Input) process, a command value calculation process, and an interpretation process. The "O/I process" of the PLC emulator 151 is a process of outputting a result of a previous command value calculation process and then acquiring information necessary for a current command value calculation process as an input. The "command value calculation process" of the PLC emulator 151 is a process of calculating a position command value for the actuator emulator 155. The interpretation process is a process of interpreting the robot program 112. In the example of Fig. 10, "200 ms" is specified as the number of cycles of the control period required for execution of the robot command 114 included in the robot program 112 through this interpretation process.

Similarly, the robot controller emulator 161 sequentially executes the O/I process and the command value calculation process in the control period "N". The "O/I process" of the robot controller emulator 161 is a process of outputting a result of a previous command value calculation process and then acquiring information necessary for a current command value calculation process as an input. The "command value calculation process" of the robot controller emulator 161 is a process of calculating a position command value for the actuator emulator 165.

The PLC emulator 151 repeatedly executes the PLC program 111 for the execution time "200 ms" of the robot command 114 while the robot controller emulator 161 is executing the robot command 114. When the control period is "1 ms", the PLC emulator 151 executes the PLC program 111 for 200 cycles (=200 ms/1 ms). During this time, the PLC emulator 151 executes the O/I process and the command value calculation process in a control period "1 ms", and outputs the command value to the actuator emulator 155 in a control period "1 ms".

On the other hand, the robot controller emulator 161 executes the O/I process and the command value calculation process in a predetermined control period while executing the robot command 114. When the control period is "1 ms", the robot controller emulator 161 executes the O/I process and the command value calculation process in a control period "1 ms", and outputs the command value to the actuator emulator 165 in a control period "1 ms".

The execution of the robot command 114 is completed in the control period "N+200" which is "200 ms" after the execution of the robot command 114. The PLC emulator 151 executes the interpretation process for the next robot command 115 in the next control period "N+201". In the example of Fig. 10, "10 ms" is specified as the execution time of the robot command 115 through this interpretation process.

The PLC emulator 151 repeatedly executes the PLC program 111 for the execution time "10 ms" of the robot command 115 while the robot controller emulator 161 is executing the robot command 115. When the control period is "1 ms", the PLC emulator 151 executes the PLC program 111 for 10 cycles (=10 ms/1 ms). During this time, the PLC emulator 151 executes the O/I process and the command value calculation process, and outputs the command value to the actuator emulator 155 in a control period "1 ms".

On the other hand, the robot controller emulator 161 executes the O/I process and the command value calculation process in a predetermined control period while executing the robot command 115. When the control period is "1 ms", the robot controller emulator 161 executes the O/I process and the command value calculation process in a control period "1 ms", and outputs the command value to the actuator emulator 165 in the control period "1 ms".

Thus, the command value is output to each of the actuator emulators 155 and 165 in a state in which the PLC emulator 151 and the robot controller emulator 161 are synchronized, such that different types of control targets (for example, an arm robot or a moving table) can be synchronized.

Although the example in which the control period of the PLC emulator 151 and the control period of the robot controller emulator 161 are the same has been described above, the control periods may differ as long as the control periods are synchronized. As an example, one of these control periods may be an integer multiple of the other control period. For example, the control period of the PLC emulator 151 may be "1 ms" and the control period of the robot controller emulator 161 may be "2 ms".

An execution period of the control program (that is, the PLC program 111 and the robot program 112) in the simulator including the PLC emulator 151 and the robot controller emulator 161 has been described above, but the same applies to an execution period of the control program in the FA system 50 as an actual device. Therefore, description of the execution period of the control program in the FA system 50 will not be repeated.

The above-described operation data D2 (see Fig. 1) collected by the simulator is collected in a control period illustrated in Fig. 10. The control period is determined according to the communication period of the controller 51 (see Fig. 1) as an actual device and the drive device 55 (see Fig. 1). On the other hand, the above-described operation data D1 (see Fig. 1) collected by the FA system 50 as an actual device is collected in a communication period of the controller 51 and the drive device 55. Thus, the operation data D1 and D2 are collected in the corresponding period, which makes the comparison of the operation data D1 and D2 easier.

### <J. Simulation screen>

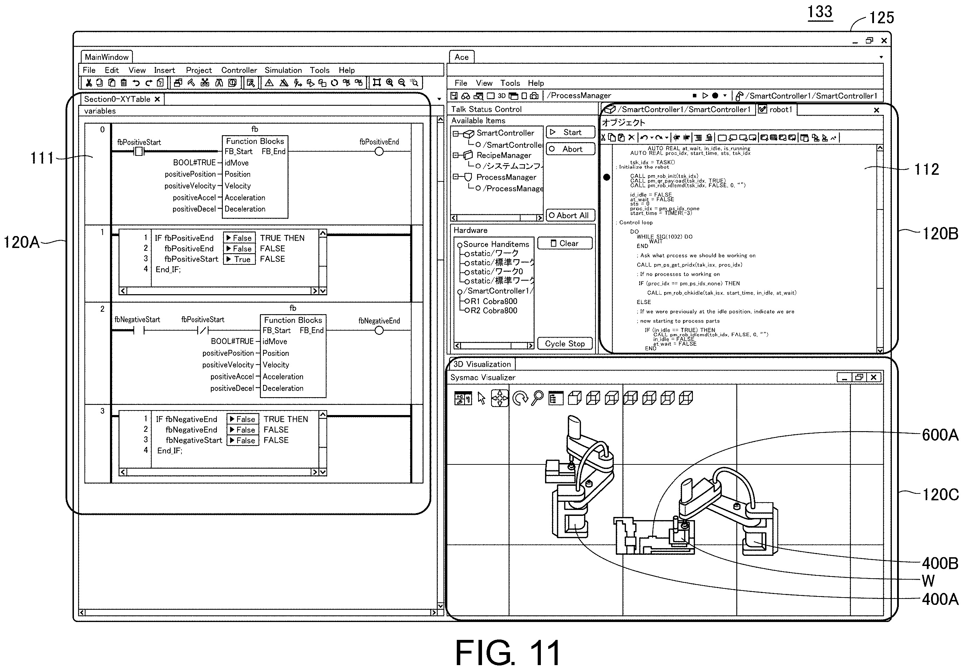

Fig. 11 is a diagram illustrating an example of a simulation screen of the information processing device 100. An example of a simulation screen for realizing a synchronous simulation will be described with reference to Fig. 11.

The edit screen 125 for editing the PLC program 111 and the robot program 112 is shown on the output device 133 of the information processing device 100. The edit screen 125 includes an editing area 120A for the PLC program 111, an editing area 120B for the robot program 112, and a display area 120C for displaying a behavior of a drive target such as an arm robot or a moving table on a simulation in real time.

In the display area 120C, robot images 400A and 400B representing the arm robot 400 that is an actual device, and a moving table image 600A representing the moving table 600 that is an actual device are shown. The robot images 400A and 400B or the moving table image 600A are generated from, for example, computer aided design (CAD) data or the like. As an example, the information processing device 100 has a CAD data import function for a three-dimensional shape, and the CAD data of the arm robot 400 and the CAD data of the moving table 600 are read using this import function. When the information processing device 100 performs the synchronous simulation on the two arm robots 400 and the one the moving table 600, the information processing device 100 generates three-dimensional data of the two arm robots from the CAD data of the arm robot 400 and also generates three-dimensional data of the one moving table from the CAD data of the moving table 600.

When the simulation is performed on the one moving table 600 and the two arm robots 400, the one first emulator 150 and the two second emulators 160 are used, as in the example of Fig. 11. As described above, the first emulator 150 and the second emulator output the command value to the corresponding actuator emulator according to a synchronized control period. The information processing device 100 sequentially updates each piece of three-dimensional data of the arm robot and also sequentially updates the three-dimensional data of the moving table based on the command values that are sequentially output. The information processing device 100 sequentially updates displays of the robot images 400A and 400B from the respective three-dimensional data of the arm robot that are sequentially updated. In synchronization with this, the information processing device 100 sequentially updates the display of the moving table image 600A from the three-dimensional data of the moving table that is sequentially updated.

Accordingly, the displays of the robot images 400A and 400B and the display of the moving table image 600A are updated in synchronization according to the execution of the PLC program 111 and the robot program 112. As a result, the designer can easily confirm whether or not the PLC program 111 and the robot program 112 are operating as intended, and can easily debug the PLC program 111 and the robot program 112.

### <K. Hardware configuration of the information processing device 100>

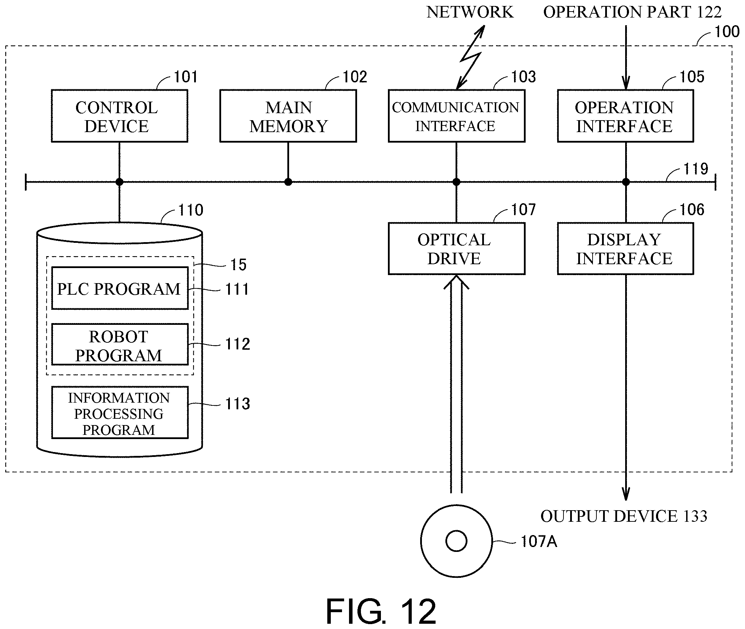

A hardware configuration of the information processing device 100 will be described with reference to Fig. 12. Fig. 12 is a schematic diagram illustrating the hardware configuration of the information processing device 100.

The information processing device 100 is, for example, a computer configured according to a general-purpose computer architecture. The information processing device 100 includes a control device 101, a main memory 102, a communication interface 103, an operation interface 105, a display interface 106, an optical drive 107, and a storage device 110 (storage part). These components are communicatively connected to each other via an internal bus 119.

The control device 101 includes, for example, at least one integrated circuit. The integrated circuit includes, for example, at least one central processing unit (CPU), at least one application specific integrated circuit (ASIC), at least one field programmable gate array (FPGA), or a combination thereof. The control device 101 realizes various processes according to the present embodiment by loading the program into the main memory 102 and executing the program. The main memory 102 includes a volatile memory, and functions as a work memory required for program execution in the control device 101.

The communication interface 103 exchanges data with an external device via a network. The external device includes, for example, the controller 51 (see Fig. 1) described above, a server, and other communication devices. The information processing device 100 may be configured to be able to download the information processing program 113 via the communication interface 103. The information processing program 113 is a program for providing an integrated development environment for the control program 15, and provides functions such as the above-described simulation process.

The operation interface 105 is connected to the operation part 122 and captures a signal indicating a user operation from the operation part 122. The operation part 122 typically includes a keyboard, a mouse, a touch panel, a touch pad, and the like, and receives an operation from a user. The designer can edit the control program 15 using the operation part 122.

The display interface 106 is connected to the output device 133 and sends an image signal for displaying an image to the output device 133 according to a command from the control device 101 or the like. The output device 133 includes a display, an indicator, or the like, and presents various types of information to the user.

The optical drive 107 reads various programs stored in the optical disc 107A or the like from the optical disc 107A or the like and installs the programs in the storage device 110.

The configuration example in which the necessary program is installed in the information processing device 100 via the optical drive 107 is shown in Fig. 12, but the present invention is not limited thereto, and the program may be downloaded from a server device on the network or the like. Alternatively, a program on the information processing device 100 may be configured to be rewritten by a program written in a storage medium such as a universal serial bus (USB) memory, a secure digital (SD) card, and a compact flash (CF).

The storage device 110 is, for example, a hard disk or an external storage medium. As an example, the storage device 110 stores the information processing program 113 and the control program 15. The information processing program 113 may be provided by being incorporated in a part of any program, not as a stand-alone program. In this case, the synchronization process according to the present embodiment is realized in cooperation with any program. Even when the program is a program that does not include a module of such a part, this does not depart from the spirit of the information processing device 100 according to the present embodiment. Further, some or all of functions provided by the information processing program 113 according to the present embodiment may be realized by dedicated hardware. Further, the information processing device 100 may be configured in the form of a so-called cloud service in which at least one server realizes the synchronization processing according to the present embodiment.

### <L. Control structure of information processing device 100>

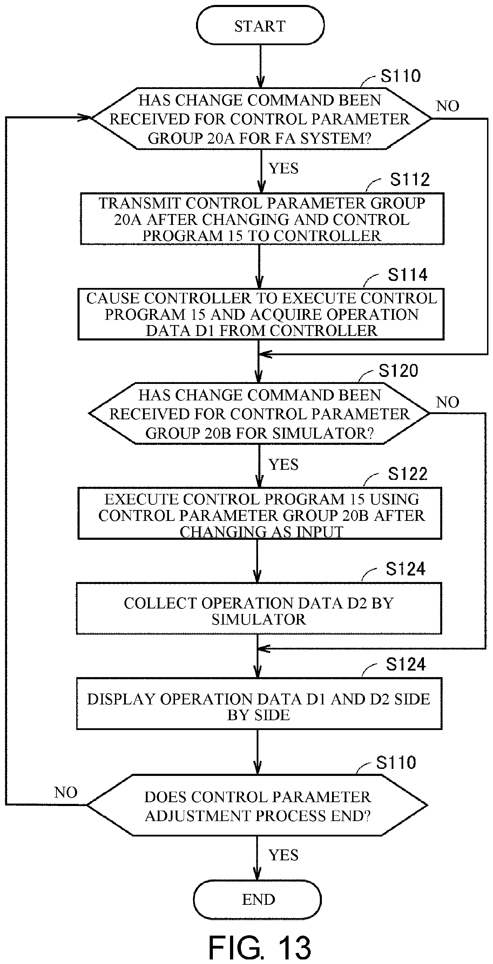

A control structure of the information processing device 100 will be described with reference to Fig. 13. Fig. 13 is a flowchart illustrating a process of adjusting the control parameter groups 20A and 20B of the control program 15. A process of manually adjusting the control parameter groups 20A and 20B is illustrated in in Fig. 13. The process of Fig. 13 is realized by the control device 101 of the information processing device 100 executing a program. In other aspects, a part or all of the process may be executed by circuit elements or other hardware.

In step S110, the control device 101 determines whether or not a change command has been received for the control parameter group 20A for the FA system 50. As an example, the change command is issued based on the fact that the designer has changed the control parameter group 20A. When the control device 101 determines that the change command has been received for the control parameter group 20A (YES in step S110), the control device 101 switches control to step S112. Otherwise (NO in step S110), the control device 101 switches control to step S120.

In step S112, the control device 101 transmits the control parameter group 20A after changing and the control program 15 to the controller 51 of the FA system 50. In this case, when the control program 15 has already been downloaded to the controller 51, the transmission of the control program 15 may be omitted.

In step S114, the control device 101 causes the controller 51 of the FA system 50 to execute the control program 15. This allows the controller 51 to execute the control program 15 using the control parameter group 20A as an input. In this case, the first collection part 60 of the FA system 50 collects the operation data D1 indicating the behavior of the drive device 55. The collected operation data D1 is transmitted to the information processing device 100.

In step S120, the control device 101 determines whether or not a change command has been received for the simulator control parameter group 20B. As an example, the change command is issued based on the fact that the designer has changed the control parameter group 20B. When the control device 101 determines that the change command has been received for the control parameter group 20B (YES in step S120), the control device 101 switches control to step S122. Otherwise (NO in step S120), the control device 101 switches control to step S130.

In step S122, the control device 101 executes the control program 15 as the controller emulator 120 with the control parameter group 20B after changing as an input.

In step S124, the control device 101 collects the operation data D2 indicating the behavior of the actuator emulator 124, as the second collection part 130.

In step S130, the control device 101 displays the operation data D1 and the operation data D2 side by side on the output device 133. This allows the designer to easily ascertain the difference between the operation data D1 and the operation data D2, and can use the difference as a clue for adjusting the control parameter groups 20A and 20B.

In step S140, the control device 101 determines whether or not the control parameter adjustment process ends. When the control device 101 determines to determine whether or not the control parameter adjustment process ends (YES in step S140), the process illustrated in Fig. 13 ends. Otherwise (NO in step S140), the control device 101 returns the control to step S110.

Although the example in which the designer manually adjusts the control parameter has been described, the control parameter may be automatically adjusted as described with respect to the adjustment part 134 in Fig. 3.

### <M. Conclusion>

As described above, the information processing system 1 causes the controller 51 to execute the control program 15 using the control parameter group 20A as an input, and acquires the operation data D1 of the drive device 55. Meanwhile, the information processing system 1 causes the controller emulator 120 to execute the control program 15 using the control parameter group 20B as an input, and acquires the operation data D2 on the computer of the actuator emulator 124. The information processing system 1 causes the output device 133 to display the acquired operation data D1 and D2. This allows the information processing system 1 to provide an environment in which the behavior of the FA system 50 can be compared with the behavior of the simulator.

The designer can adjust the control parameter group 20B to bring the operation data D2 closer to the operation data D1, thereby designing a simulator that can more accurately simulate the behavior of the FA system 50. As a result, the accuracy of various emulators such as the controller emulator 120 and the actuator emulator 124 is improved. The designer can construct a new simulator using such various emulators, thereby highly designing simulators of various FA systems.

Further, the designer can adjust the control parameter group 20A to bring the operation data D1 closer to the operation data D2, thereby operating the FA system 50 as a simulator. Such adjustment is effective, for example, with respect to deterioration over time or environmental change of the FA system 50. Although the accuracy of the FA system 50 may decrease due to deterioration over time, environmental changes, or the like, the designer can confirm that the operation data D1 deviates from the operation data D2, thereby understanding that the accuracy decreases for some causes. Thereafter, the designer can adjust the control parameter group 20A to bring the operation data D1 closer to the operation data D2, thereby bringing the accuracy of the FA system 50 close to original accuracy.

### <N. Supplement>

Thus, the present embodiment includes the following disclosures.

### [Configuration 1]

An information processing system including:
drive device (55);
a controller that executes a control program (15) using a first control parameter group (20A) as an input and controls the drive device (55) according to the control program;
an actuator emulator (124) that simulates a behavior of the drive device (55);
a controller emulator (120) that simulates a behavior of the controller, the controller emulator (120) executing the control program (15) using a second control parameter group (20B) as an input, and controlling the actuator emulator (124) according to the control program (15);
a first collection part (50) that collects first operation data (D1) indicating a behavior of the drive device (55) when the control program (15) is executed using the first control parameter group (20A) as an input;
a second collection part (130) that collects second operation data (D2) indicating a behavior of the actuator emulator (124) when the control program (15) is executed using the second control parameter group (20B) as an input; and
an output part (133) that outputs a plurality of first operation data (D1) collected by the first collection part (60) and a plurality of second operation data (D2) collected by the second collection part (130).

### [Configuration 2]

The output part (133) displays the plurality of first operation data (D1) collected by the first collection part (60) and the plurality of second operation data (D2) collected by the second collection part (130) side by side.

### [Configuration 3]

The output part (133) displays the plurality of first operation data (D1) and the plurality of second operation data (D2) on the same time axis.

### [Configuration 4]

The output part (133) highlights a combination in which a difference is greater than a predetermined value among combinations of each of the plurality of first operation data (D1) and each of the plurality of second operation data (D2), as compared with other combinations

### [Configuration 5]

The information processing system further includes:
a calculation part (132) that calculates a degree of a difference between the plurality of first operation data (D1) and the plurality of second operation data (D2); and
an adjustment part (134) that repeatedly adjusts at least one of the first control parameter group (20A) and the second control parameter group (20B) so that the degree of the difference becomes small.

### [Configuration 6]

The adjustment part (134) ends the adjustment of at least one of the first control parameter group (20A) and the second control parameter group (20B) based on the fact that the degree of the difference satisfies a predetermined condition.

### [Configuration 7]

The first collection part (60) collects the first operation data (D1) in a communication period of the drive device (55) and the controller, and
the second collection part (130) collects the second operation data (D2) in a predetermined period according to the communication period.

### [Configuration 8]

An information processing method comprising:
causing a controller to execute a control program (15) using a first control parameter group (20A) as an input and controlling a drive device (55) according to the control program;
controlling an actuator emulator (124) that simulates a behavior of the drive device (55);
controlling a controller emulator (120) that simulates a behavior of the controller, the controlling of the controller emulator (120) including executing the control program (15) using a second control parameter group (20B) as an input and controlling the actuator emulator (124) according to the control program (15),
collecting first operation data (D1) indicating a behavior of the drive device (55) when the control program (15) is executed using the first control parameter group (20A) as an input;
collecting second operation data (D2) indicating a behavior of the actuator emulator (124) when the control program (15) is executed using the second control parameter group (20B) as an input; and
outputting a plurality of collected first operation data (D1) and a plurality of collected second operation data (D2).

### [Configuration 9]

An information processing program executed by a computer, the information processing program causing the computer to execute:
causing a controller to execute a control program (15) using a first control parameter group (20A) as an input and controlling a drive device (55) according to the control program; controlling an actuator emulator (124) that simulates a behavior of the drive device (55); and controlling a controller emulator (120) that simulates a behavior of the controller, the controlling of the controller emulator (120) including executing the control program (15) using a second control parameter group (20B) as an input and controlling the actuator emulator (124) according to the control program (15), wherein the information processing program causes the computer to further execute
collecting first operation data (D1) indicating a behavior of the drive device (55) when the control program (15) is executed using the first control parameter group (20A) as an input; collecting second operation data (D2) indicating a behavior of the actuator emulator (124) when the control program (15) is executed using the second control parameter group (20B) as an input; and outputting a plurality of collected first operation data (D1) and a plurality of collected second operation data (D2).

The embodiments disclosed this time are to be considered to be illustrative in all points and not to be restrictive. The scope of the present invention is shown not by the above description but by the claims, and is intended to include meanings equivalent to the claims and all changes within the claims.

### [Reference Signs List]

1 Information processing system
15 Control program
20A, 20B Control parameter group
50 FA system
50X Simulator
51 Controller
55 Drive device
60 First collection part
100 Information processing device
101 Control device
102 Main memory
103 Communication Interface
105 Operation interface
106 Display interface
107 Optical drive
107A Optical disc
110 Storage device
111 PLC program
112 Robot program
113 Information processing program
114, 115 Robot command
119 Internal bus
120 Controller emulator
120A, 120B Editing area
120C Display area
122 Operating part
124, 155, 165 Actuator emulator
125 Editing screen
130 Second collection part
132 Calculation part
133 Output device
134 Adjustment part
140 Timer
150 First emulator
151 PLC emulator
151A Execution part
152, 162 Trajectory computation part
153, 163 Command value generation part
154 Interpretation part
156A, 156B Servo driver emulator
157A, 157B, 167A, 167B Servo motor emulator
160 Second emulator
161 Robot controller emulator
300 Robot controller
400 Arm robot
400A, 400B Robot image
420 Base
424 First arm
428 Second arm
432 End effector
440, 440A, 440B, 440C, 440D, 601, 601A, 601B Servo motor
500, 500A, 500B Servo driver
510, 514 Difference computation part
512 Position control part
516 Speed control part
518 Addition part
520 Torque filter
522 Current control part
524 Speed detection part
600 Moving table
600A Moving table image
602 Installation table
605 Encoder

## Claims

1. An information processing system comprising:
a drive device;
a controller that executes a control program using a first control parameter group as an input and controls the drive device according to the control program;
an actuator emulator that simulates a behavior of the drive device;
a controller emulator that simulates a behavior of the controller, the controller emulator executing the control program using a second control parameter group as an input, and controlling the actuator emulator according to the control program;
a first collection part that collects first operation data indicating a behavior of the drive device when the control program is executed using the first control parameter group as the input;
a second collection part that collects second operation data indicating a behavior of the actuator emulator when the control program is executed using the second control parameter group as the input; and
an output part that outputs a plurality of first operation data collected by the first collection part and a plurality of second operation data collected by the second collection part.

2. The information processing system according to claim 1, wherein the output part displays the plurality of first operation data collected by the first collection part and the plurality of second operation data collected by the second collection part side by side.

3. The information processing system according to claim 1 or 2, wherein the output part displays the plurality of first operation data and the plurality of second operation data on the same time axis.

4. The information processing system according to any one of claims 1 to 3, wherein the output part highlights a combination in which a difference is greater than a predetermined value among combinations of each of the plurality of first operation data and each of the plurality of second operation data, as compared with other combinations.

5. The information processing system according to any one of claims 1 to 4, further comprising:
a calculation part that calculates a degree of a difference between the plurality of first operation data and the plurality of second operation data; and
an adjustment part that repeatedly adjusts at least one of the first control parameter group and the second control parameter group so that the degree of the difference becomes small.

6. The information processing system according to claim 5, wherein the adjustment part ends adjusting at least one of the first control parameter group and the second control parameter group based on a fact that the degree of the difference satisfies a predetermined condition.

7. The information processing system according to any one of claims 1 to 6,
wherein the first collection part collects the first operation data in each communication period of the drive device and the controller, and
the second collection part collects the second operation data in a predetermined period according to the communication period.

8. An information processing method comprising:
causing a controller to execute a control program using a first control parameter group as an input and controlling a drive device according to the control program;
controlling an actuator emulator that simulates a behavior of the drive device;
controlling a controller emulator that simulates a behavior of the controller, wherein controlling the controller emulator includes: executing the control program using a second control parameter group as an input and controlling the actuator emulator according to the control program;
collecting first operation data indicating a behavior of the drive device when the control program is executed using the first control parameter group as the input;
collecting second operation data indicating a behavior of the actuator emulator when the control program is executed using the second control parameter group as the input; and
outputting a plurality of collected first operation data and a plurality of collected second operation data.

9. An information processing program executed by a computer, the information processing program causing the computer to execute:
causing a controller to execute a control program using a first control parameter group as an input and controlling a drive device according to the control program;
controlling an actuator emulator that simulates a behavior of the drive device;
controlling a controller emulator that simulates a behavior of the controller, wherein controlling the controller emulator includes: executing the control program using a second control parameter group as an input and controlling the actuator emulator according to the control program;
collecting first operation data indicating a behavior of the drive device when the control program is executed using the first control parameter group as the input;
collecting second operation data indicating a behavior of the actuator emulator when the control program is executed using the second control parameter group as the input; and
outputting a plurality of collected first operation data and a plurality of collected second operation data.
